# EUROPEAN PATENT APPLICATION

(11) **EP 3 073 111 A1**
(43) Date of publication of application: **28.09.2016**
(21) Application number: 16161698.2
(22) Date of filing: 22.03.2016
(51) Int. Cl.: F04B 1/12

(54) **PISTON AND SLIPPER ASSEMBLY FOR HYDRAULIC UNIT**

(30) Priority: 25.03.2015 US 201514667726
(71) Applicant: Hamilton Sundstrand Corporation, Charlotte, NC 28217 (US)
(72) Inventor: CAMPBELL, Kris H., Poplar Grove, IL 61065 (US); LEMMERS, Glenn C. Jr., Loves Park, IL 61111 (US); SMITH, Doren C., Rockford, IL 61101 (US); FRANKLIN, Mark J., Janesville, WI 53546 (US)
(74) Representative: Bridge, Kerry Ann

(57) **Abstract**

A piston and slipper assembly 400 of a hydraulic unit includes a slipper 404 and a piston 402. The slipper includes a swashplate interface 406 having a balance land and a piston ball socket extending to a ball engagement end, where a slipper length is defined between the balance land and the ball engagement end. The piston includes a piston ball member 414 having a ball 416 and a piston body 418. The ball engages with the piston ball socket. The piston body 418 is coaxially fixed within a piston sleeve 420. The piston sleeve defines a piston diameter D1, and a piston length is defined between a centroid 422 of the ball 416 and a piston end face. A ratio of the piston diameter to the slipper length is between 1.35 and 1.42, and a ratio of the piston length to the piston diameter is between 2.51 and 2.55.

## Description

### BACKGROUND OF THE INVENTION

Embodiments of this invention generally relate to an integrated drive generator, and more particularly, to a piston and slipper assembly of a hydraulic unit of an integrated drive generator.

Aircraft currently rely on electrical, pneumatic, and hydraulic systems for secondary power. A typical electrical system utilizes an integrated drive generator coupled to each engine of an aircraft to provide fixed frequency power to a power distribution system and associated loads. One type of integrated drive generator includes a generator, a hydraulic unit, and a differential assembly arranged in a common housing. The differential assembly is operably coupled to an aircraft engine, such as a gas turbine engine, via an input shaft. The rotational speed of the input shaft varies during operation of the engine. The hydraulic unit cooperates with the differential assembly to provide a constant speed to the generator throughout engine operation.

Due to engineering designs and requirements, various components of the systems must be designed to operatively function together. For example, various components of the hydraulic unit are configured to appropriately and accurately mate and fit together to enable efficient operation. Constraints such as power, envelope, weight, leakage, operational stresses, environmental stresses, pressure limits, speed limits, material constraints, loads, and the like present a number of design challenges.

### BRIEF DESCRIPTION OF THE INVENTION

According to one embodiment of the invention, a piston and slipper assembly of a hydraulic unit includes a slipper and a piston. The slipper includes a swashplate interface having a balance land and a piston ball socket extending to a ball engagement end, where a slipper length is defined between the balance land and the ball engagement end. The piston includes a piston ball member having a ball and a piston body. The ball engages with the piston ball socket. The piston body is coaxially fixed within a piston sleeve. The piston sleeve defines a piston diameter, and a piston length is defined between a centroid of the ball and a piston end face. A ratio of the piston diameter to the slipper length is between 1.35 and 1.42, and a ratio of the piston length to the piston diameter is between 2.51 and 2.55.

A method of assembling a hydraulic unit includes inserting a plurality of pistons of a plurality of piston and slipper assemblies into a cylinder block assembly. Each of the piston and slipper assemblies has a slipper including a swashplate interface having a balance land and a piston ball socket extending to a ball engagement end. Each of the piston and slipper assemblies also has a piston including a piston ball member having a ball and a piston body. The ball engages with the piston ball socket. The piston body is coaxially fixed within a piston sleeve. The piston sleeve defines a piston diameter, a piston length is defined between a centroid of the ball and a piston end face, and a slipper length is defined between the balance land and the ball engagement end. A ratio of the piston diameter to the slipper length is between 1.35 and 1.42, and a ratio of the piston length to the piston diameter is between 2.51 and 2.55. The balance land of each of the piston and slipper assemblies is placed in contact with a swashplate. The slipper of each of the piston and slipper assemblies is retained to maintain contact with the swashplate.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of an exemplary power generator system of an aircraft;
FIG. 2 is a cross-sectional schematic view of an example of an integrated drive generator;
FIG. 3 is a cross-sectional schematic view of an example of a hydraulic unit of an integrated drive generator;
FIG. 4 is a cross-sectional schematic view of a piston and slipper assembly of the hydraulic unit of FIG. 3 in accordance with an embodiment of the invention;
FIG. 5 is a cross-sectional schematic view of the slipper of the piston and slipper assembly of FIG. 4; and
FIG. 6 is a cross-sectional schematic view of the piston of the piston and slipper assembly of FIG. 4.

The detailed description explains embodiments of the invention, together with advantages and features, by way of example, with reference to the drawings.

### DETAILED DESCRIPTION OF THE INVENTION

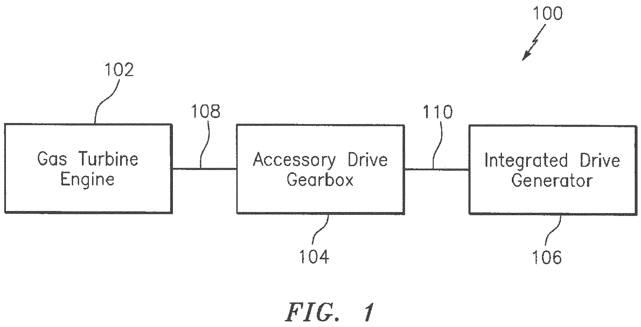

Referring now to FIG. 1, an example of a generator system 100 is schematically illustrated. The generator system 100 includes a gas turbine engine 102 that is configured to rotationally drive an integrated drive generator 106 through an accessory drive gearbox 104 mounted on the gas turbine engine 102. The accessory drive gearbox 104 is coupled to a spool 108 of the gas turbine engine 102, and the speed of the spool 108 varies throughout the entire operation of the gas turbine engine 102, depending on operational characteristics, such as high altitude cruising flight or take-off of an aircraft in which the generator system 100 is installed. An input shaft 110 is configured to transfer rotational energy to the integrated drive generator 106 from the accessory drive gearbox 104. Those skilled in the art will appreciated that the generator system 100 of FIG. 1 directed to an aircraft is merely presented for illustrative and explanatory purposes and other generator systems and/or engines may be used without departing from the scope of the invention.

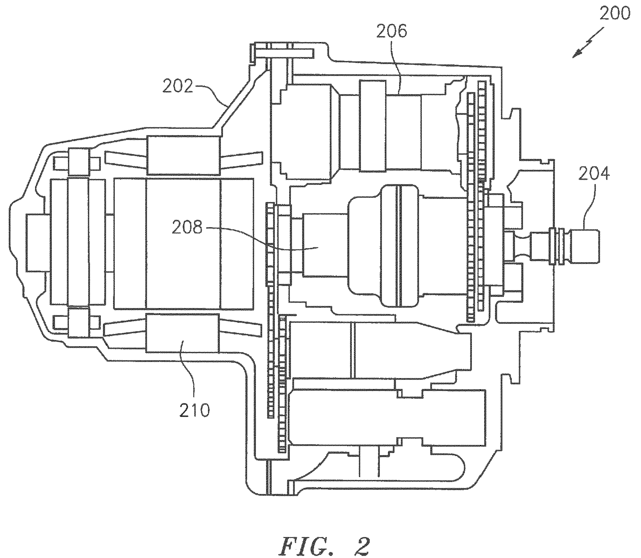

An example of an integrated drive generator 200 including a housing 202 is shown in FIG. 2. In the illustrated embodiment, the integrated drive generator 200 includes an input shaft 204 configured to receive rotational drive from an accessory drive gearbox (see FIG. 1). The rotational speed of the input shaft 204 varies depending upon the operation of the engine (see FIG. 1). To this end, a hydraulic unit 206 cooperates with a differential assembly 208 to convert the variable rotational speed from the input shaft 204 to a fixed rotational output speed that is transferred to a generator 210.

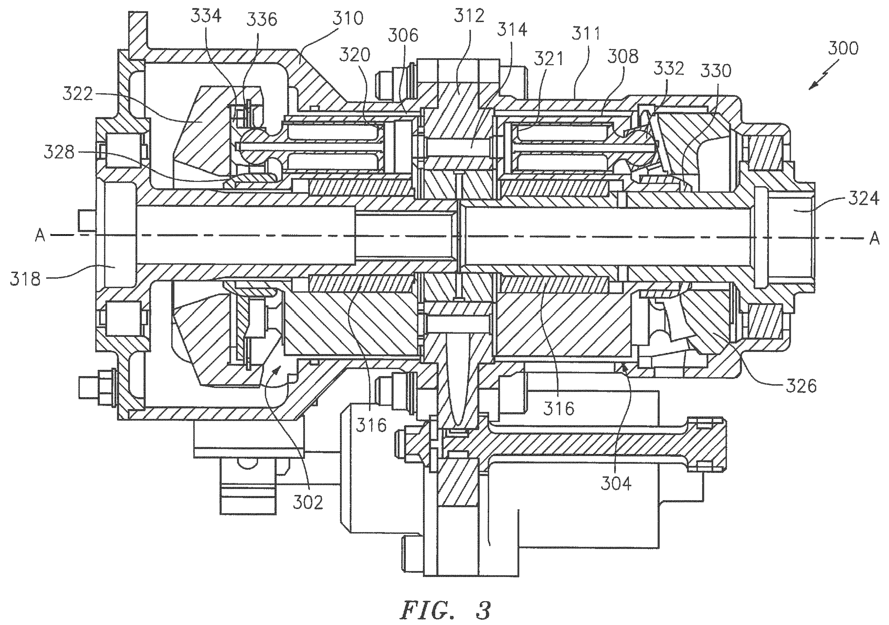

Referring now to FIG. 3, an exemplary embodiment of a hydraulic unit 300 of an integrated drive generator, such as the integrated drive generator 200 of FIG. 2, is shown. The hydraulic unit 300 includes a variable displacement hydraulic pump 302 and a fixed displacement hydraulic motor 304. The variable displacement hydraulic pump 302 and the fixed displacement hydraulic motor 304 have respective cylinder block assemblies 306 and 308 which are arranged for rotation about a common axis A within housings 310, 311 on opposite sides of a stationary port plate 312 of the hydraulic unit 300. The port plate 312 is formed with one or more kidneys or apertures 314 through which hydraulic fluid communication between the pump 302 and the motor 304 is established during normal operation of the hydraulic unit 300. A biasing mechanism 316 resiliently biases the cylinder block assemblies 306, 308 in the direction of the port plate 312.

The operation of the hydraulic unit 300 in an integrated drive generator, for example an integrated drive generator of an aircraft, involves transmission of torque from an engine of the aircraft to an input, which rotates an input shaft 318 of the hydraulic unit 300 about axis A. The cylinder block assembly 306 of the pump 302 is connected to the input shaft 318 for rotation therewith. Pistons 320 within the cylinder block assembly 306 of the pump 302 are displaced during rotation an amount which is a function of the setting of a variable swashplate or wobbler 322 of the pump 302. Pistons 321 within the cylinder block assembly 308 of the motor 304 are displaced during rotation with respect to a fixed swash plate or wobbler 326 of the motor 304. Those of skill in the art will appreciate that any number of pistons and associated apertures may be employed without departing from the scope of the invention. For example, in one embodiment, the system may include nine pistons 320, 321 in each of the motor 304 and the pump 302, and nine apertures 314 may pass through the port plate 312. Further, for example, the number of apertures 314 is not dependent on the number of pistons 320, 321, and in some embodiments there may be five apertures 314 when nine pistons 320, 321 are employed. Thus, the number of pistons 320, 321 and the number apertures 314 may be varied without departing from the scope of the invention.

Hydraulic fluid under pressure from the hydraulic pump 302 is delivered to the hydraulic motor 304 through the apertures 314 of port plate 312 for rotating the cylinder block assembly 308 and an output shaft 324 to which the cylinder block assembly 308 is fixedly connected. The swashplate or wobbler 326 of the motor 304 is fixedly configured so that an operating speed of the motor 304 is a function of a displacement of the pump 302. The rotary output from output shaft 324 is added to or subtracted from the rotary motion from the engine through a conventional differential gearing of an integrated drive generator for operating an electrical generator at a substantially constant rotational speed. That is, since the speed of the rotation from the aircraft engine to the input shaft 318 of the hydraulic unit 300 will vary, the position of the variable wobbler 322 is adjusted in response to these detected speed variations for providing the necessary reduction or increase in the rotational speed for obtaining a desired constant output speed to the generator. During normal operation, there is a hydrostatic balance of the cylinder block assemblies 306, 308 and port plate 312. Although the hydraulic unit 300 illustrated and described herein refers to the variable unit as a pump 302 and the fixed unit as a motor 304, hydraulic units having other configurations, such as where the variable unit functions as a motor and the hydraulic unit operates as a pump for example, are within the scope of the invention.

During operation, the wobbler 322 is permitted to turn, rotate, tumble, and/or wobble about a retainer ball 328. The wobbler 322 is configured to wobble, etc., in part, as a result of the movement of the pistons 320, 321, respectively. A retainer ball 330 is configured to turn or rotate with respect to the wobbler 326. Each piston 320, 321 has a ball 332 (ball of piston 320 not labeled for clarity) on one end. The ball 332 of the pistons 320, 321 is retained within a slipper 334. The slipper 334 is retained by a slipper retainer 336. The slipper retainer 336 enables the slipper 334 to be held in contact with the wobbler 322, 326, thus enabling operational coupling and/or contact between the wobblers 322, 326 and the pistons 320, 321, respectively, of the pump 302 and the motor 304.

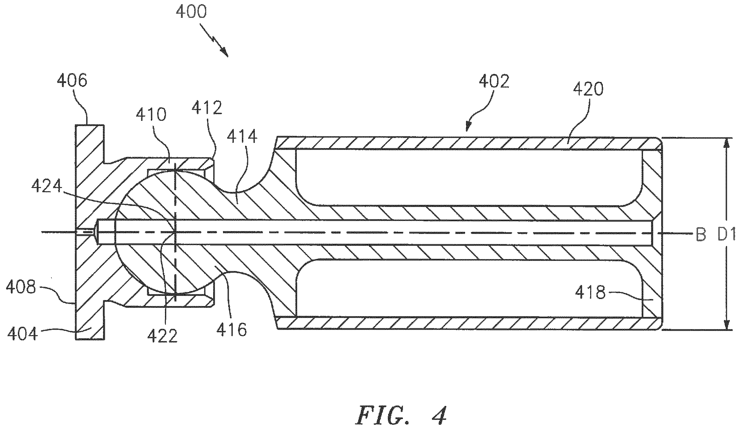

Turning now to FIG. 4, a cross-sectional schematic view of a piston and slipper assembly 400 of a hydraulic unit, such as the hydraulic unit 300 of FIG. 3, is depicted in accordance with an embodiment of the invention. The piston and slipper assembly 400 includes a piston 402 and a slipper 404, such a piston 320, 321 and slipper 334 of FIG. 3. The slipper 404 includes a swashplate interface 406 having a balance land 408 and a piston ball socket 410 extending to a ball engagement end 412. The balance land 408 provides force balancing with respect to a swashplate or wobbler, such as wobbler 326, 322 of FIG. 3.

The piston 402 includes a piston ball member 414 having a ball 416 and a piston body 418. The ball 416 engages with the piston ball socket 410 of the slipper 404. The piston body 418 is coaxially fixed within a piston sleeve 420 having a common central axis B. The central axis B is substantially parallel to the axis A of the hydraulic unit 300 of FIG. 3 when the piston 402 is installed therein. The piston sleeve 420 defines a piston diameter D1. The piston diameter D1 is sized to fit within a piston bore of a cylinder block assembly, such as the cylinder block assembly 306, 308 of FIG. 3. In an embodiment, the piston diameter D1 is about 0.459 inches (1.166 cm). The piston 402 translates along axis B when in motion, and the slipper 404 pivots about the ball 416, where a centroid 422 of the ball 416 remains substantially aligned with a centroid 424 of the piston ball socket 410.

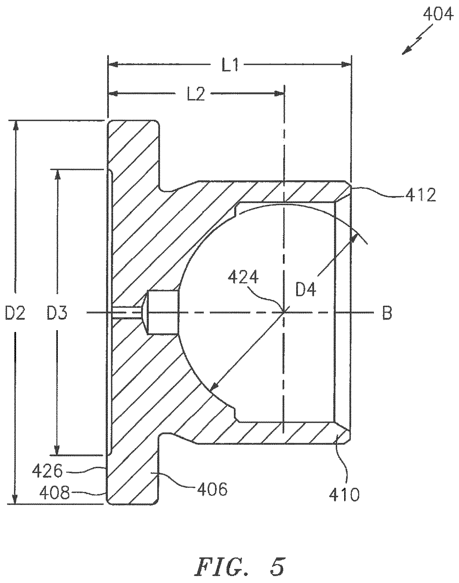

FIG. 5 is a cross-sectional schematic view of the slipper 404 of the piston and slipper assembly 400 of FIG. 4. In the example of FIG. 5, a slipper length L1 is defined between the balance land 408 and the ball engagement end 412. A piston ball socket centroid offset L2 is defined between the balance land 408 and the centroid 424 of the piston ball socket 410. A balance land outer diameter D2 and a balance land inner diameter D3 are defined on the balance land 408 forming an annular region 426 between the balance land outer diameter D2 and the balance land inner diameter D3. A socket diameter D4 is defined within the piston ball socket 410 through the centroid 424. In an embodiment, the slipper length L1 is about 0.331 inches (0.841 cm), and the piston ball socket centroid offset L2 is about 0.24 inches (0.610 cm). The balance land outer diameter D2 is about 0.519 inches (1.318 cm), and the balance land inner diameter D3 is about 0.39 inches (0.991 cm). The socket diameter D4 is about 0.294 inches (0.747 cm).

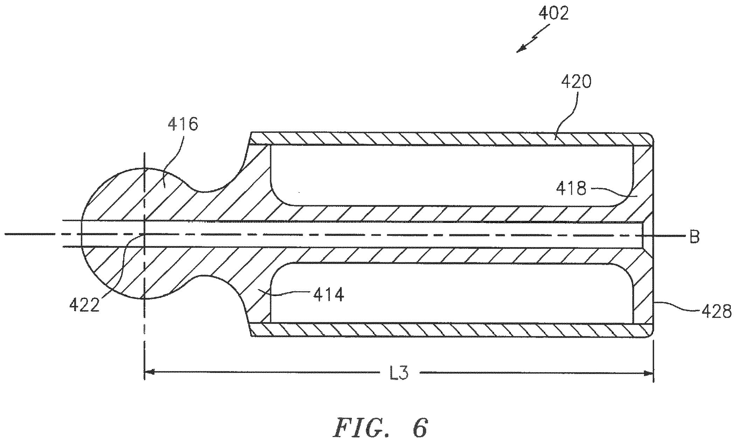

FIG. 6 is a cross-sectional schematic view of the piston 402 of the piston and slipper assembly 400 of FIG. 4. In the example of FIG. 6, a piston length L3 is defined between the centroid 422 of the ball 416 and a piston end face 428. In an embodiment, the piston length L3 is about 1.161 inches (2.949 cm). The piston end face 428 aligns an outer face of the piston body 418 of the piston ball member 414 with an edge of the piston sleeve 420.

A number of ratios are defined between multiple features of the piston and slipper assembly 400 of FIGS. 4-6. In an embodiment, a ratio of the piston diameter D1 to the slipper length L1 is between 1.35 and 1.42, and a ratio of the piston length L3 to the piston diameter D1 is between 2.51 and 2.55. A ratio of the slipper length L1 to the piston ball socket centroid offset L2 is between 1.33 and 1.43. A ratio of the piston length L3 to the slipper length L1 is between 3.43 and 3.59. A ratio of the balance land outer diameter D2 to the piston diameter D1 is between 1.12 and 1.38. A ratio of the balance land outer diameter D2 to the slipper length L1 is between 1.53 and 1.61. A ratio of the balance land outer diameter D2 to the balance land inner diameter D3 is between 1.31 and 1.35. A ratio of the balance land inner diameter D3 to the slipper length L1 is between 1.15 and 1.21. A ratio of the piston diameter D1 to the balance land inner diameter D3 is between 1.16 and 1.19. A ratio of the piston length L3 to the balance land outer diameter D2 is between 2.21 and 2.26. A ratio of the piston length L3 to the balance land inner diameter D3 is between 2.94 and 3.01.

A method of assembling a hydraulic unit, such as the hydraulic unit 300 of FIG. 3, includes inserting a plurality of pistons 402 of a plurality of piston and slipper assemblies 400 of FIG. 4 into a cylinder block assembly, such as cylinder block assembly 306, 348 of FIG. 3. As previously described in reference to FIGS. 4-6, each of the piston and slipper assemblies 400 has a slipper 404 including a swashplate interface 406 having a balance land 408 and a piston ball socket 410 extending to a ball engagement end 412. Each of the piston and slipper assemblies 400 also has a piston 402 including a piston ball member 414 having a ball 416 and a piston body 418. The piston body 418 is coaxially fixed within a piston sleeve 420. The ball 416 engages with the piston ball socket 410. The balance land 408 of each of the piston and slipper assemblies 400 is placed in contact with a swashplate, such as wobbler 322, 326. The slipper 404 of each of the piston and slipper assemblies 400 is retained to maintain contact with the swashplate using, for example, slipper retainer 336 of FIG. 3. It will be appreciated that the steps of the method can be done in an alternate order, such as retaining the slipper 404 of each of the piston and slipper assemblies 400 in contact with a swashplate prior to inserting the pistons 402 into the cylinder block assembly. The method can be repeated for each cylinder block assembly 306, 308.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments.

Accordingly, the invention is not to be seen as limited by the foregoing description, but is only limited by the scope of the appended claims.

## Claims

1. A piston and slipper assembly (400) of a hydraulic unit (300), the piston and slipper assembly comprising:
a slipper (404) comprising a swashplate interface (406) having a balance land (408) and a piston ball socket (410) extending to a ball engagement end, wherein a slipper length is defined between the balance land and the ball engagement end; and
a piston (402) comprising a piston ball member (414) having a ball (416) and a piston body (418), the ball engages with the piston ball socket, the piston body is coaxially fixed within a piston sleeve (420), wherein the piston sleeve defines a piston diameter (D1), a piston length is defined between a centroid (422) of the ball (416) and a piston end face, a ratio of the piston diameter to the slipper length is between 1.35 and 1.42, and a ratio of the piston length to the piston diameter is between 2.51 and 2.55.

2. The piston and slipper assembly of claim 1, wherein a piston ball socket centroid offset is defined between the balance land and a centroid (424) of the piston ball socket (410), and a ratio of the slipper length to the piston ball socket centroid offset is between 1.33 and 1.43.

3. The piston and slipper assembly of claim 1 or 2, wherein a ratio of the piston length to the slipper length is between 3.43 and 3.59.

4. The piston and slipper assembly of any preceding claim, wherein the balance land (408) has a balance land inner diameter (D3) and a balance land outer diameter (D2), and a ratio of the balance land outer diameter (D2) to the piston diameter is between 1.12 and 1.38.

5. The piston and slipper assembly of claim 4, wherein a ratio of the balance land outer diameter (D2) to the slipper length is between 1.53 and 1.61.

6. The piston and slipper assembly of claim 4, wherein a ratio of the balance land outer diameter (D2) to the balance land inner diameter (D3) is between 1.31 and 1.35.

7. The piston and slipper assembly of claim 4, wherein a ratio of the balance land inner diameter (D3) to the slipper length is between 1.15 and 1.21.

8. The piston and slipper assembly of claim 4, wherein a ratio of the piston diameter to the balance land inner diameter (D3) is between 1.16 and 1.19.

9. The piston and slipper assembly of claim 4, wherein a ratio of the piston length to the balance land outer diameter (D2) is between 2.21 and 2.26.

10. The piston and slipper assembly of claim 4, wherein a ratio of the piston length to the balance land inner diameter (D3) is between 2.94 and 3.01.

11. A method of assembling a hydraulic unit, the method comprising:
inserting a plurality of pistons (402) of a plurality of piston and slipper assemblies (400) into a cylinder block assembly, each of the piston and slipper assemblies comprising a slipper (404) including a swashplate interface (406) having a balance land (408) and a piston ball socket (410) extending to a ball engagement end, and a piston (402) including a piston ball member (414) having a ball (416) and a piston body (418), the ball (416) engages with the piston ball socket (410), the piston body (418) is coaxially fixed within a piston sleeve (420), wherein the piston sleeve (420) defines a piston diameter, a piston length is defined between a centroid of the ball and a piston end face, a slipper length is defined between the balance land and the ball engagement end, a ratio of the piston diameter to the slipper length is between 1.35 and 1.42, and a ratio of the piston length to the piston diameter is between 2.51 and 2.55;
placing the balance land (408) of each of the piston and slipper assemblies (400) in contact with a swashplate; and
retaining the slipper (404) of each of the piston and slipper assemblies (400) to maintain contact with the swashplate.

12. The method of claim 11, wherein a piston ball socket centroid offset is defined between the balance land (408) and a centroid (424) of the piston ball socket (410), and a ratio of the slipper length to the piston ball socket centroid offset is between 1.33 and 1.43.

13. The method of claim 11 or 12, wherein a ratio of the piston length to the slipper length is between 3.43 and 3.59.

14. The method of any of claims 11 to 13, wherein the balance land (408) has a balance land inner diameter (D3) and a balance land outer diameter (D2), and a ratio of the balance land outer diameter (D2) to the piston diameter is between 1.12 and 1.38, a ratio of the balance land outer diameter (D2) to the slipper length is between 1.53 and 1.61, and a ratio of the balance land outer diameter(D2) to the balance land inner diameter (D3) is between 1.31 and 1.35.

15. The method of claim 14, wherein a ratio of the balance land inner diameter (D3) to the slipper length is between 1.15 and 1.21, a ratio of the piston diameter to the balance land inner diameter (D3) is between 1.16 and 1.19, a ratio of the piston length to the balance land outer diameter (D2) is between 2.21 and 2.26, and a ratio of the piston length to the balance land inner diameter (D3) is between 2.94 and 3.01.
